# EUROPÄISCHE PATENTSCHRIFT

(11) **EP 2 775 368 B1**
(45) Veröffentlichungstag und Bekanntmachung des Hinweises auf die Patenterteilung: **10.04.2019**
(21) Anmeldenummer: 14000547.1
(22) Anmeldetag: 15.02.2014
(51) Int. Cl.: G05D 23/02, G05D 23/13, F16K 27/02, F16K 31/00

(54) **Überlasteinheit für ein Thermostatventil**
Overload unit for a thermostatic valve
Unité de surcharge pour vanne thermostatique

(30) Priorität: 06.03.2013 DE 102013003743
(43) Veröffentlichungstag der Anmeldung: 10.09.2014
(73) Patentinhaber: Grohe AG, 58675 Hemer (DE)
(72) Erfinder: Huck, Kai, 58300 Wetter (DE); Schwartpaul, Tanja, 58809 Neuenrade (DE); Riedel, Björn, 44879 Bochum (DE); Luig, Frank-Thomas, 58708 Mendne (DE)

(56) Entgegenhaltungen:
- EP-A2- 0 461 536
- DE-A1- 4 123 856
- GB-A- 2 172 382

## Beschreibung

Die vorliegende Erfindung betrifft eine Überlasteinheit für ein Thermostatventil, das bevorzugt in einer Thermostatkartusche eingesetzt wird. Solche Thermostatventile beziehungsweise Thermostatkartuschen werden insbesondere für Mischarmaturen als Dusch- und/oder Badewannenarmaturen eingesetzt, um eine konstante Auslauftemperatur des Wassers zu gewährleisten.

Bekannte Mischarmaturen weisen ein Gehäuse mit einem Warmwasserzulauf, einem Kaltwasserzulauf und einem Mischwasserabfluss auf. Solche Mischarmaturen sind regelmäßig mit einem Thermostatventil ausgestattet, das eine konstante Temperatur des Mischwassers bereitstellt. Hierzu steuert das Thermostatventil mit Hilfe eines Dehnstoffelements, beispielsweise aus einer schraubenförmigen Bimetallfeder, ein Mischventil. Das Dehnstoffelement wird von dem Mischwasser umspült und ändert proportional zur Temperatur des Mischwassers seine Länge. Durch die Längenänderung des Dehnstoffelements wird das Mischventil verstellt und ändert dadurch den Durchfluss des Warmwasserzulaufs und des Kaltwasserzulaufs. Um die Betriebssicherheit solcher Thermostatventile zu gewährleisten, werden die Dehnstoffelemente regelmäßig mittels einer Überlasteinheit vor Überlastung geschützt. Hierzu werden die Dehnstoffelemente durch ein Anlagestück der Überlasteinheit abgestützt, das durch eine Feder in einer Hülse vorgespannt ist. Bei einer zu starken Ausdehnung des Dehnstoffelements gibt das Anlagestück der Überlasteinheit nach und entlastet somit das Dehnstoffelement.

Thermostatventile müssen regelmäßig gereinigt beziehungsweise thermisch desinfiziert werden. Dies erfolgt durch ein Spülen des Thermostatventils mit über 70 °C heißem Wasser, wozu die Warmwasserzufuhr vollständig geöffnet und die Kaltwasserzufuhr vollständig geschlossen werden muss. Hierzu ist es erforderlich, dass das Dehnstoffelement durch die Überlasteinheit freigegeben wird, was durch eine Demontage der Überlasteinheit erfolgen kann. Bei bekannten Thermostatventilen wird die Überlasteinheit beispielsweise auch durch eine in Reihe geschaltete, separate Verstelleinrichtung freigegeben. Hierdurch wird jedoch ein erhöhter Bauraum benötigt. Zudem muss bei den bekannten Thermostatventilen nach der Reinigung beziehungsweise thermischen Desinfektion eine Mischtemperatur wieder neu justiert werden, wodurch ein erhöhter Wartungsaufwand entsteht.

Aus der EP 0461 536 A2 ist ein thermostatisch geregeltes Mischventil mit einer Sollwerteinstellvorrichtung bekannt. Das darin offenbarte Mischventil verfügt über eine Einstellvorrichtung für den Anschlag einer Überlasteinrichtung. Dabei ist vorgesehen, dass der Anschlag mittels der Einstellvorrichtung einmalig justiert wird, um beispielsweise eine Temperaturkallibrierung zu erreichen. Eine solche Kallibrierung ist insbesondere dann erforderlich, wenn eine Temperaturskala an der Außenseite der Bedienelemente angeordnet ist. In diesem Fall ist es wünschenswert, dass das Mischwasser exakt mit der auf der Temperaturskala angezeigten Temperatur abgegeben wird. Dies kann durch die entsprechende Kallibrierung mittels der Einstellvorrichtung erreicht werden. Zudem kann bei einer anderen Ausführungsform die Temperatureinstellung einmalig vorgenommen werden, um danach die Einstellvorrichtung unzugänglich zu verschließen. Dies ist beispielsweise dann der Fall, wenn die Mischvorrichtung gegen Vandalismus geschützt werden soll.

Ferner ist aus der GB 2172382 A ein Mischventil zum Mischen von heißen und kalten Wasser mit einem drehbaren Steuerknopf bekannt, wobei der Steuerknopf manuell betätigbar ist um die festen Mischverhältnisse einzustellen, in denen das heiße und kalte Wasser gemischt wird. Es handelt sich dabei um einen Festwertmischer, der keine thermostatische Regelung, wie beispielsweise durch ein Dehnstoffelement, aufweist.

Aufgabe der Erfindung ist es daher, die mit Bezug auf den Stand der Technik geschilderten Probleme zumindest teilweise zu lösen und insbesondere eine Überlasteinheit für ein Thermostatventil anzugeben, das eine kompakte Bauform und/oder eine vereinfachte Justierung der Mischtemperatur ermöglicht. Zudem soll auch ein Thermostatventil angegeben werden, das sich durch eine kompakte Bauform und eine vereinfachte Justierung der Mischtemperatur auszeichnet.

Diese Aufgaben werden gelöst mit einer Überlasteinheit und einem Thermostatventil gemäß den Merkmalen des unabhängigen Patentanspruchs. Weitere vorteilhafte Ausgestaltungen der Erfindung sind in den abhängigen Patentansprüchen angegeben. Es ist darauf hinzuweisen, dass die in den Patentansprüchen einzeln aufgeführten Merkmale in beliebiger, technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Die Überlasteinheit für ein Thermostatventil weist eine Hülse mit einer Kammer und ein in der Kammer durch eine Feder vorgespanntes Anlagestück auf, wobei die Hülse an einer Umfangsfläche zumindest eine Rampe mit einem Steigungswinkel von 5° bis 80° (Winkelgrad) aufweist.

Die hier vorgeschlagene Überlasteinheit besteht bevorzugt aus Metall oder Kunststoff. Die Hülse der Überlasteinheit weist insbesondere einen rohrförmigen Abschnitt auf, der sich entlang einer Längsachse erstreckt und ein erstes Ende und ein zweites Ende in Richtung der Längsachse hat. Zudem weist die Hülse der Überlasteinheit bevorzugt eine Länge von 20 mm bis 50 mm (Millimeter) und einen Durchmesser von 10 mm bis 30 mm (Millimeter) auf. Der rohrförmige Abschnitt der Hülse bildet in seinem Inneren eine (einzelne) Kammer, die an dem ersten Ende eine Öffnung aufweist und an dem zweiten Ende durch eine Wand und/oder einen Verschluss (zumindest teilweise) verschlossen oder verschließbar ist. In der Kammer sind ein Anlagestück und eine (Spiral-)Feder, bevorzugt koaxial, angeordnet. Das Anlagestück ist durch die Feder in Richtung der Öffnung bevorzugt mit einer Kraft von 100 N - 150 N (Newton) vorgespannt. Das Anlagestück erstreckt sich bevorzugt zumindest teilweise durch die Öffnung und dient der Anlage eines Dehnstoffelements. Wenn durch das Dehnstoffelement eine Auslösekraft auf das Anlagestück aufgebracht wird, die die Kraft der Feder übersteigt, gibt das Anlagestück nach. Hierzu ist das Anlagestück in der Kammer, bevorzugt in Richtung der Längsachse, beweglich.

Die Hülse weist an einer Umfangsfläche zumindest eine Rampe auf. Die zumindest eine Rampe erstreckt sich bevorzugt helixförmig oder schraubenförmig über die Umfangsfläche der Hülse. Weiterhin erstreckt sich die zumindest eine Rampe, eine einzige Rampe oder eine einzige Rampe einer Mehrzahl von Rampen bevorzugt maximal 360°, besonders bevorzugt maximal 180° um die Hülse. Dies bedeutet mit anderen Worten, dass sich die zumindest eine Rampe in der Längsrichtung der Hülse bevorzugt nicht überschneidet. Die Rampe dient als Gleitbahn für einen Kulissenstein und/oder eine Gleitfläche einer Thermostatkatusche beziehungsweise eines Thermostatventils. Durch die zumindest eine Rampe wird der Kulissenstein und/oder die Gleitfläche bevorzugt einseitig zwangsgeführt, so dass eine Rotation der Hülse in der Thermostatkatusche beziehungsweise in dem Thermostatventil in eine Bewegung der Hülse entlang ihrer Längsachse umgesetzt wird.

Die zumindest eine Rampe der Überlasteinheit einerseits und der Kulissenstein beziehungsweise die Gleitfläche der Thermostatkatusche oder des Thermostatventils andererseits wirken daher nach Art eines Hubgetriebes zusammen. Somit kann durch eine Rotation der Hülse das Anlagestück der Überlasteinheit von einem Dehnstoffelement wegbewegt werden, so dass das Dehnstoffelement freigegeben und ein Zapfen von heißem Wasser von über 70 °C ermöglicht wird. Die zumindest eine Rampe weist ferner einen Steigungswinkel auf, bei dem es sich um einen Winkel zwischen einer zur Längsachse orthogonalen Ebene und einer zur mindestens einen Rampe parallelen Tangente der Umfangsfläche handelt. Dies bedeutet auch, dass es sich bei dem Steigungswinkel um einen Winkel zwischen einer zur Längsachse orthogonalen Gerade und einer gedachten Linie handelt, die sich beim Abwickeln der spiralförmigen oder schraubenförmigen Rampe von der Umfangsfläche und um die Längsachse ergeben würde. Der Steigungswinkel beträgt 5° - 80°, besonders bevorzugt 10° - 60° und ganz besonders bevorzugt 30° - 45°. Des Weiteren ist bevorzugt, dass der Steigungswinkel derart bemessen ist, dass die Überlasteinheit durch eine Drehung von 180° um die Längsachse durch die Rampe um mindestens 2, 4, 6, 8 oder sogar 10 mm (Millimeter) parallel zu der Längsachse verstellbar ist.

Vorzugsweise steigt die zumindest eine Rampe in Richtung einer Längsachse der Hülse. Dies bedeutet insbesondere, dass die zumindest eine Rampe zumindest mit einer Richtungskomponente parallel zu der Längsachse der Hülse verläuft.

Weiterhin ist es vorteilhaft, wenn die zumindest eine Rampe in einer radialen Richtung der Hülse orthogonal zu einer Längsachse der Hülse verläuft. Dies bedeutet insbesondere, dass die zumindest eine Rampe zu der Längsachse der Hülse und mit der Oberfläche der Hülse einen rechten Winkel bildet.

Ferner ist es vorteilhaft, wenn die zumindest eine Rampe ausgehend von der Umfangsfläche in einer radialen Richtung der Hülse eine Erstreckung von 1 mm bis 5 mm aufweist. Dies bedeutet insbesondere, dass die zumindest eine Rampe um 1 mm bis 5 mm (Millimeter) aus der Oberfläche der Hülse hervorsteht.

Besonders vorteilhaft ist es, wenn die zumindest eine Rampe ein Plateau aufweist. Unter Plateau wird hier insbesondere ein Bereich der Rampe verstanden, der im Wesentlichen in Richtung der Längsachse keine Steigung aufweist. Das Plateau dient insbesondere als Rast für einen Kulissenstein und/oder eine Gleitfläche einer Thermostatkatusche beziehungsweise eines Thermostatventils. Dies bedeutet insbesondere, dass die Hülse bei Krafteinleitung (nur) parallel zu der Längsachse durch die zumindest eine Rampe nicht in Rotation um die Längsachse versetztbar ist, wenn sich ein Kulissenstein und/oder eine Gleitfläche der Thermostatkatusche (nur) im Bereich des Plateaus befindet. Mit anderen Worten dient das Plateau der Sicherung der Hülse in einer vorgegebenen Stellung.

Zudem ist es vorteilhaft, wenn das Plateau eine Kuppe aufweist. Diese Kuppe ist bevorzugt in einem Bereich der zumindest einen Rampe angeordnet, in dem die zumindest eine Rampe mit einer positiven Steigung in das Plateau übergeht. Die Kuppe hat die Aufgabe zu verhindern, dass der Kulissenstein und/oder die Gleitfläche der Thermostatkartusche das Plateau selbstständig (wieder) verlassen kann.

Ferner ist es vorteilhaft, wenn die zumindest eine Rampe als Ringsegment ausgebildet ist. Dies bedeutet insbesondere, dass die zumindest eine Rampe als separates Bauteil ausgebildet ist, dass an der Oberfläche der Hülse befestigt ist. Das Ringsegment kann insbesondere an einer Innenfläche und/oder an einer Außenfläche Rippen aufweisen, die bevorzugt parallel zu der Längsachse verlaufen. Ebenso ist möglich, dass mehrere Ringsegmente über den Umfang der Hülse ausgebildet sind, die jeweils eine einzelne Rampe formen. Bevorzugt sind zwei solche (in Umfangsrichtung zueinander beabstandete) Ringsegmente vorgesehen.

Gemäß einem weiteren Aspekt der Erfindung wird auch ein Thermostatventil mit einem Dehnstoffelement vorgeschlagen, wobei das Dehnstoffelement durch eine hier vorgeschlagene Überlasteinheit gegen eine Überlastung geschützt ist und wobei zumindest eine Rampe der Überlasteinheit mit zumindest einer Gleitfläche des Thermostatventils derart zusammenwirkt, dass die Überlasteinheit zur Durchführung einer Reinigung des Thermostatventils durch eine Rotation parallel zu einer Längsachse verstellbar ist.

Ein mit einer erfindungsgemäßen Überlasteinheit ausgestattetes Thermostatventil wird bevorzugt in einer Mischbatterie einer Dusch- und/oder Badewannenarmatur zur Bereitstellung einer konstanten Temperatur eines Wassers eingesetzt. Das Dehnstoffelement hat insbesondere eine Spiralfeder aus einem Bimetall oder ein (mit Paraffin gefülltes) Wachsdehnstoffelement. Bei der zumindest einen Gleitfläche des Thermostatventils handelt es sich insbesondere um einen Nocken oder einen Kulissenstein, der entlang der zumindest einen Rampe bewegbar ist. Die Überlasteinheit ist insbesondere zur Durchführung einer Reinigung beziehungsweise thermischen Desinfektion des Thermostatventils durch eine Rotation um die Längsachse und parallel zu der Längsachse von dem Dehnstoffelement weg bewegbar. Bezüglich der Überlasteinheit wird auf die vorhergehende Beschreibung verwiesen.

Das Thermostatventil kann insbesondere wie folgt betrieben werden:
a) Einsetzen der Überlasteinheit in das Thermostatventil,
b) Ausrichten der Überlasteinheit (insbesondere des Anlagestücks) gegenüber dem Dehnstoffelement bei einer Solltemperatur des Wassers, wobei bevorzugt ein Positionierungsgewinde zwischen einem Gehäuse des Thermostatventils und einem Einsatz der Überlasteinheit eingesetzt wird,
c) Ausrücken (eines Teils) der Überlasteinheit von dem Dehnstoffelement,
d) Durchführen eines Reinigungsprozesses bzw. Desinfektionsprozesses durch Durchspülen des Thermostatventils bei einer gegenüber der Solltemperatur erhöhter Temperatur des Wassers,
e) Einrücken (eines Teils) der Überlasteinheit zu dem Dehnstoffelement ohne erneutes Ausrichten, und
f) Betrieb des Thermostatventils mit der Solltemperatur.

Zur Realisierung des vorstehend genannten Betriebsverfahrens, insbesondere der Schritte c) und e) kann die Rampe der Überlasteinheit und/oder der Schnellverschluss bzw. die Schnellverstellung genutzt werden, also eine Überlasteinheit bzw. ein Thermostatventil, wie es vorstehend als vorteilhaft beschrieben ist. Insbesondere verbleibt der ausgerichtete Einsatz der Überlasteinheit (allein) in dem Thermostatventil, ohne dass für die nachträgliche Durchführung des Schrittes f) eine erneute Ausrichtung / Justierung erforderlich ist.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, diese jedoch nicht darauf beschränkt ist. Dabei sind gleiche Bauteile in den Figuren mit demselben Bezugszeichen versehen. Es zeigen schematisch:
- Fig. 1:: eine Überlasteinheit für ein Thermostatventil in einer ersten perspektivischen Darstellung;
- Fig. 2:: die Überlasteinheit für ein Thermostatventil in einer zweiten perspektivischen Darstellung;
- Fig. 3:: ein Thermostatventil mit einer Überlasteinheit in einer Schnittdarstellung; und
- Fig. 4:: das Thermostatventil aus Fig. 3, wobei die Überlasteinheit zum Zwecke der Reinigung/Desinfektion (teilweise) entfernt ist.

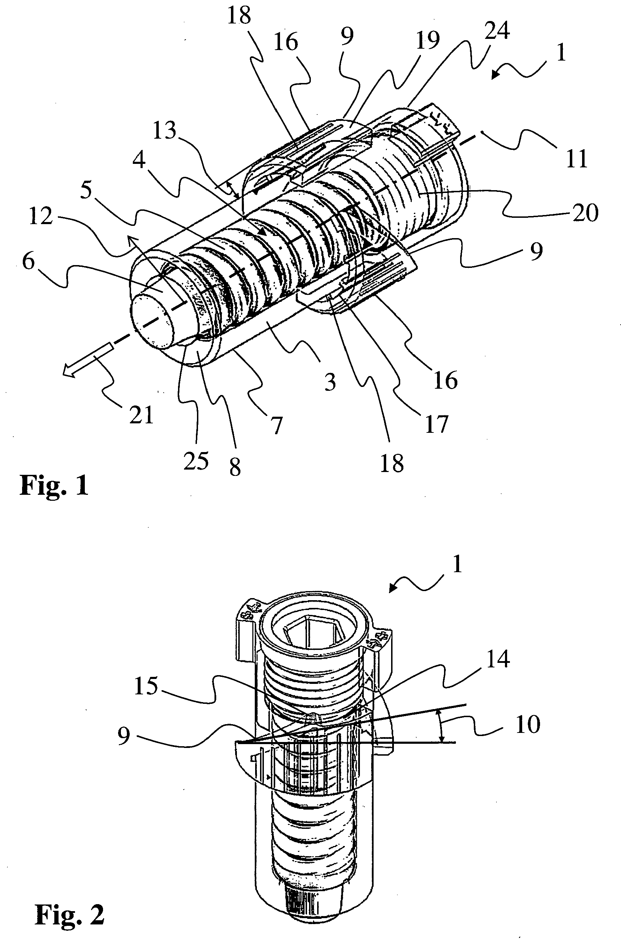

Die Fig. 1 zeigt eine Überlasteinheit 1 mit einer rohrförmigen Hülse 3, die sich entlang einer Längsachse 11 erstreckt. Weiterhin weist die Überlasteinheit 1 ein erstes Ende 8 und ein zweites Ende 24 auf. Die Hülse 3 bildet in ihrem Inneren eine Kammer 4, in der ein Anlagestück 6 durch eine Feder 5 in einer Längsrichtung 21 parallel zu der Längsachse 11 in Richtung einer Öffnung 25 am ersten Ende 8 der Hülse 3 vorgespannt ist. Die Kammer 4 ist an dem zweiten Ende 24 der Hülse 3 durch einen Verschluss 20 verschlossen, der in diesem Ausführungsbeispiel als Schraube ausgebildet ist. Die Überlasteinheit 1 weist eine äußere Umfangsfläche 7 auf, auf der zwei Rampen 9 durch zwei Ringsegmente 16 gebildet sind. Die Ringsegmente 16 weisen jeweils eine Innenfläche 17 und eine Außenfläche 19 auf, auf denen jeweils einer Mehrzahl von Rippen 18 ausgebildet sind. Die Rampen 9 weisen in einer radialen Richtung 12 ausgehend von der Umfangsfläche 7 eine Erstreckung 13 auf. Anzumerken ist an dieser Stelle, dass die beiden Rampen 9 identisch ausgebildet und um 180° um die Längsachse 11 versetzt angeordnet sind.

Die Fig. 2 zeigt die Überlasteinheit 1 in einer zweiten perspektivischen Ansicht, wobei zu erkennen ist, dass die Rampen 9 einen Steigungswinkel 10 aufweisen. Darüber hinaus weisen die Rampen 9 jeweils ein Plateau 14 mit einer Kuppe 15 auf.

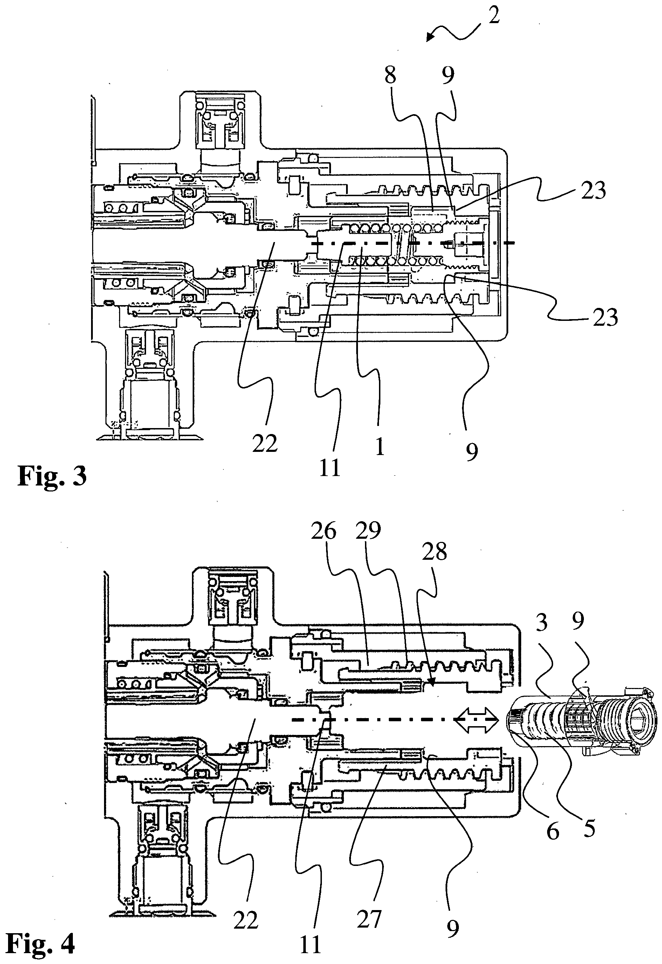

Aus der Fig. 3 geht ein Thermostatventil 2 hervor, wobei ein Dehnstoffelement 22 durch eine Überlasteinheit 1 gegen Überlastung geschützt ist. Die Überlasteinheit 1 ist um ihre Längsachse 11 rotierbar, wobei Gleitflächen 23 des Thermostatventils 2 jeweils auf den Rampen 9 der Überlasteinheit 1 gleiten, so dass die Überlasteinheit 1 durch ein Rotieren um die Längsachse 11 parallel zu der Längsachse 11 verstellbar ist.

Fig. 4 veranschaulicht die Situation, dass die Überlasteinheit 2 zum Zwecke der Reinigung/Desinfektion (teilweise) aus dem Thermostatventil 1 entfernt ist. Während bei der erstmaligen Montage die Überlasteinheit 2 in das Thermostatventil 1 eingesetzt und über ein Positionsgewinde 29 an dem Gehäuseteil 26 und dem Einsatz 27 gegenüber dem Dehnstoffelement 22 bei einer Solltemperatur des Wassers ausgerichtet wurde, ist dieser Vorgang nicht mehr notwendig, wenn nachträglich ein Reinigungsprozess bzw. Desinfektionsprozess durch Durchspülen des Thermostatventils 1 bei einer gegenüber der Solltemperatur erhöhter Temperatur des Wassers durchgeführt werden sollte. Zur Vorbereitung dieser Prozesse wird ein Teil der Überlasteinheit 2, nämlich hier die Hülse 3 mit dem Anlagestück 6 und der Feder 5 über die Rampe 9 bzw. den Schnellverschluss 28 aus dem Einsatz 27 und damit auch von dem Dehnstoffelement 22 ausgerückt bzw. entfernt. Hierfür reicht eine geringe (maximal einmalige oder sogar maximal halbe) Rotation der Hülse 3 in dem Einsatz 27 aus, wobei anschließend Hülse 3 und Einsatz 27 voneinander entriegelt sind, so dass die Hülse 3 parallel zu der Längsachse 11 aus dem Thermostatventil entnommen werden kann. Nach dem Durchspülen des Thermostatventils 1 bei einer gegenüber der Solltemperatur erhöhter Temperatur des Wassers kann die Hülse 3 gleichermaßen schnell und einfach wieder in den Einsatz 27 eingerückt (und verriegelt) werden, in dem die Ausrückbewegung umgekehrt durchgeführt wird. Danach ist ein Betrieb des Thermostatventils 1 mit der Solltemperatur wieder möglich, ohne dass es einer erneuten Einstellung der Relativlage von Anlagestück 6 und Dehnstoffelement 22 (über das Positionsgewinde 29) bedarf.

Die hier beschriebene Überlasteinheit zeichnet sich durch eine kompakte Bauform und eine vereinfachte Justierung der Mischtemperatur nach einer Reinigung einer Thermostatkatusche beziehungsweise eines Thermostatventils aus.

Vorsorglich sei abschließend noch darauf hingewiesen, dass die in den Figuren gezeigten Kombinationen von technischen Merkmalen nicht generell zwingend sind. So können technische Merkmale einer Figur mit anderen technischen Merkmalen einer weiteren Figur und/oder der allgemeinen Beschreibung kombiniert werden. Etwas anderes soll nur gelten, wenn hier explizit die Kombination von Merkmalen ausgewiesen wurde und/oder der Fachmann erkennt, dass sonst die Grundfunktionen der Vorrichtung nicht mehr erfüllt werden können.

### Bezugszeichenliste

- 1: Überlasteinheit
- 2: Thermostatventil
- 3: Hülse
- 4: Kammer
- 5: Feder
- 6: Anlagestück
- 7: Umfangsfläche
- 8: erstes Ende
- 9: Rampe
- 10: Steigungswinkel
- 11: Längsachse
- 12: radiale Richtung
- 13: Erstreckung
- 14: Plateau
- 15: Kuppe
- 16: Ringsegment
- 17: Innenfläche
- 18: Rippen
- 19: Außenfläche
- 20: Verschluss
- 21: Längsrichtung
- 22: Dehnstoffelement
- 23: Gleitfläche
- 24: zweites Ende
- 25: Öffnung
- 26: Gehäuseteil
- 27: Einsatz
- 28: Schnellverschluss
- 29: Positionsgewinde

## Patentansprüche

1. Überlasteinheit (1) für ein Thermostatventil (2), aufweisend eine Hülse (3) mit einer Kammer (4) und ein in der Kammer (4) durch eine Feder (5) vorgespanntes Anlagestück (6), wobei die Hülse (3) an einer Umfangsfläche (7) zumindest eine Rampe (9) mit einem Steigungswinkel (10) von 5° bis 80° aufweist.

2. Überlasteinheit (1) nach dem vorhergehenden Patentanspruch wobei die zumindest eine Rampe (9) in Richtung einer Längsachse (11) der Hülse (3) steigt.

3. Überlasteinheit (1) nach einem der vorhergehenden Patentansprüche, wobei die zumindest Rampe (9) in einer radialen Richtung (12) der Hülse (3) orthogonal zu einer Längsachse (11) der Hülse (3) verläuft.

4. Überlasteinheit (1) nach einem der vorhergehenden Patentansprüche, wobei die zumindest eine Rampe (9) ausgehend von der Umfangsfläche (7) in einer radialen Richtung (12) der Hülse (3) eine Erstreckung (13) von 1 mm bis 5 mm aufweist.

5. Überlasteinheit (1) nach einem der vorhergehenden Patentansprüche, wobei die zumindest eine Rampe (9) ein Plateau (14) aufweist.

6. Überlasteinheit (1) nach Patentanspruch 5, wobei das Plateau (14) eine Kuppe (15) aufweist.

7. Überlasteinheit (1) nach einem der vorhergehenden Patentansprüche, wobei die zumindest eine Rampe (9) als Ringsegment (16) ausgebildet ist.

8. Thermostatventil (2), aufweisend ein Dehnstoffelement (22), wobei das Dehnstoffelement (22) durch eine Überlasteinheit (1) nach einem der vorhergehenden Patentansprüche gegen eine Überlastung geschützt ist und wobei zumindest eine Rampe (9) der Überlasteinheit (1) mit zumindest einer Gleitfläche (23) des Thermostatventils (2) derart zusammenwirkt, dass die Überlasteinheit (1) zur Durchführung einer Reinigung des Thermostatventils (2) durch eine Rotation parallel zu einer Längsachse (11) verstellbar ist.

## Claims

1. Overload unit (1) for a thermostatic valve (2), having a sleeve (3) with a chamber (4) and having a contact member (6) which is biased by a spring (5) in the chamber (4), wherein the sleeve (3) has on a circumferential surface (7) at least one ramp (9) having an angle of inclination (10) of from 5° to 80°.

2. Overload unit (1) according to the preceding claim, wherein the at least one ramp (9) rises in the direction of a longitudinal axis (11) of the sleeve (3).

3. Overload unit (1) according to either one of the preceding claims, wherein the at least one ramp (9) runs in a radial direction (12) of the sleeve (3) orthogonally with respect to a longitudinal axis (11) of the sleeve (3).

4. Overload unit (1) according to any one of the preceding claims, wherein, starting from the circumferential surface (7), the at least one ramp (9) has an extent (13) of from 1 mm to 5 mm in a radial direction (12) of the sleeve (3).

5. Overload unit (1) according to any one of the preceding claims, wherein the at least one ramp (9) has a plateau (14).

6. Overload unit (1) according to claim 5, wherein the plateau (14) has a protuberance (15).

7. Overload unit (1) according to any one of the preceding claims, wherein the at least one ramp (9) is in the form of an annular segment (16).

8. Thermostatic valve (2), having an expansible material element (22), wherein the expansible material element (22) is protected against overload by an overload unit (1) according to any one of the preceding claims, and wherein at least one ramp (9) of the overload unit (1) cooperates with at least one slide surface (23) of the thermostatic valve (2) in such a way that, to carry out cleaning of the thermostatic valve (2), the overload unit (1) is by rotation adjustable parallel to a longitudinal axis (11).

## Revendications

1. Unité anti-surcharge (1) destinée à une soupape thermostatique (2), comprenant une douille (3) ayant une chambre (4) et une pièce d'appui (6) précontrainte par un ressort (5) dans la chambre (4), la douille (3) comprenant, sur sa surface périphérique (7) au moins une rampe (9) ayant un angle d'inclinaison (10) de 5° à 80°.

2. Unité anti-surcharge (1) conforme à la revendication précédente,
dans laquelle la rampe (9) monte dans la direction de l'axe longitudinal (11) de la douille (3).

3. Unité anti-surcharge (1) conforme à l'une des revendications précédentes,
dans laquelle la rampe (9) s'étend perpendiculairement à l'axe longitudinal (11) de la douille (3) dans la direction radiale (12) de cette douille (3).

4. Unité anti-surcharge (1) conforme à l'une des revendications précédentes,
dans laquelle la rampe (9) à, à partir de la surface périphérique (7), dans la direction radiale (12) de la douille (3) une dimension (13) de 1 mm à 5 mm.

5. Unité anti-surcharge (1) conforme à l'une des revendications précédentes,
dans laquelle la rampe (9) comporte un plateau (14).

6. Unité anti-surcharge (1) conforme à la revendication 5,
dans laquelle le plateau (14) comporte une coupelle (15).

7. Unité anti-surcharge (1) conforme à l'une des revendications précédentes,
dans laquelle la rampe (9) est réalisée sous la forme d'un segment annulaire (16).

8. Soupape thermostatique (2) comportant un élément en matériau expansible (22), ce matériau expansible (22) étant protégé contre une surcharge par une unité anti-surcharge (1) conforme à l'une des revendications précédentes, et au moins une rampe (9) de l'unité anti-surcharge (1) coopérant avec au moins une surface de glissement (23) de la soupape thermostatique (2) de sorte que l'unité anti-surcharge (1) puisse être déplacée par rotation parallèlement à son axe longitudinal (11) pour permettre d'effectuer le nettoyage de la soupape thermostatique (2).
